# EUROPEAN PATENT APPLICATION

(11) **EP 4 271 097 A1**
(43) Date of publication of application: **01.11.2023**
(21) Application number: 22170650.0
(22) Date of filing: 28.04.2022
(51) Int. Cl.: H04W 72/08

(54) **USER EQUIPMENT AND BASE STATION INVOLVED IN SPATIAL/FREQUENCY DOMAIN MEASUREMENT**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP); NUNOME, Tomoya, Miyagi, 981-3206 (JP); KUANG, Quan, 63225 Langen (DE)
(74) Representative: Grünecker Patent- und Rechtsanwälte PartG mbB

(57) **Abstract**

Techniques disclosed herein feature a user equipment, a base station, and communication methods for a UE and for a base station. The UE comprises a transceiver and circuitry which, in operation, controls the transceiver to measure interference per frequency range on one or more configured frequency ranges and/or per spatial direction in one or more configured spatial directions, and to generate a measurement report including an indication of the measured interference per frequency range and/or per spatial direction. The transceiver, in operation, transmits the measurement report.

## Description

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates efficient reporting of interference as well as interference cell management.

In an embodiment, the techniques disclosed herein feature a user equipment, UE, comprising a transceiver and circuitry which, in operation, controls the transceiver to measure interference per frequency range on one or more configured frequency ranges and/or per spatial direction in one or more configured spatial directions, and generates a measurement report including an indication of the measured interference per frequency range and/or per spatial direction. The transceiver, in operation, transmits the measurement report.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: is a block diagram showing a base station and a user equipment,
- **Fig. 7**: is a block diagram showing spatial/frequency interference handling circuitry of a user equipment,
- **Fig. 8**: is a flow chart showing steps of a communication method for a user equipment,
- **Fig. 9**: is a flow chart showing steps of a communication method for a base station, and
- **Fig. 10**: is a schematic drawing which illustrates the relationship between interference measurement and frequency resource allocation.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

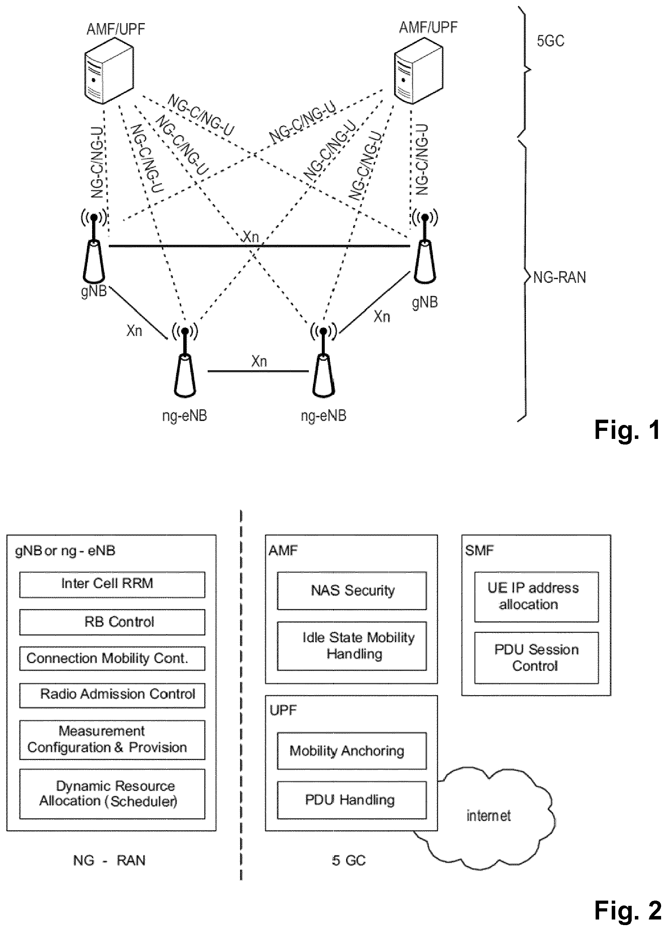

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and/or massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

In NR, a resource block (RB) is defined as 12 consecutive subcarriers in frequency domain. Resource blocks are numbered from zero upwards in frequency domain as Common resource blocks for a subcarrier spacing configuration. Physical resource blocks (PRBs) are defined within a bandwidth part (a subset of contiguous common resource blocks) and numbered per bandwidth part.

### 5G NR functional split between NG-RAN and 5GC

**Fig. 2** illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS (Non-access stratum) messages;
- Radio access network sharing;
- Dual Connectivity;
- Tight interworking between NR and E-UTRA.

The Access and Mobility Management Function (AMF) hosts the following main functions:
- Non-Access Stratum, NAS, signaling termination;
- NAS signaling security;
- Access Stratum, AS, Security control;
- Inter Core Network, CN, node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

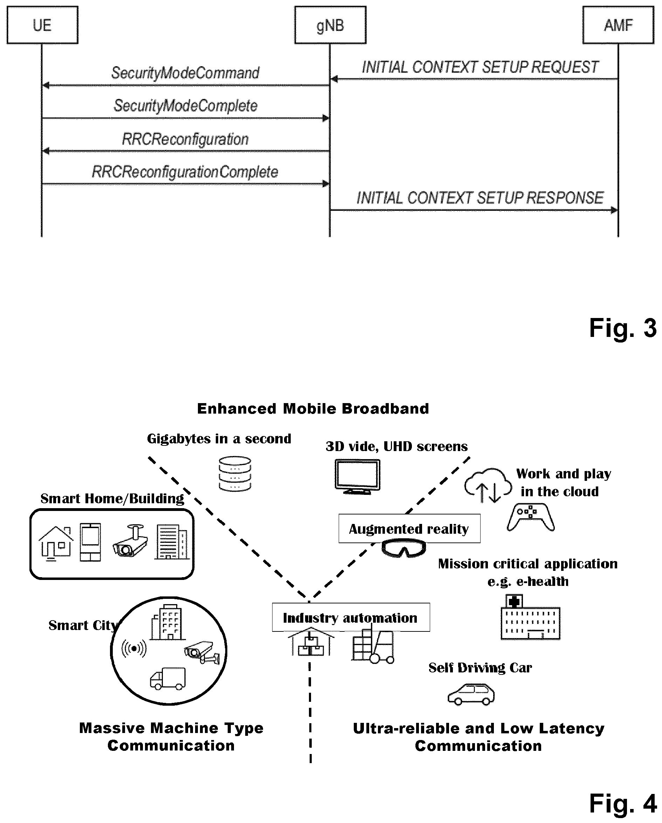

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising e.g. fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

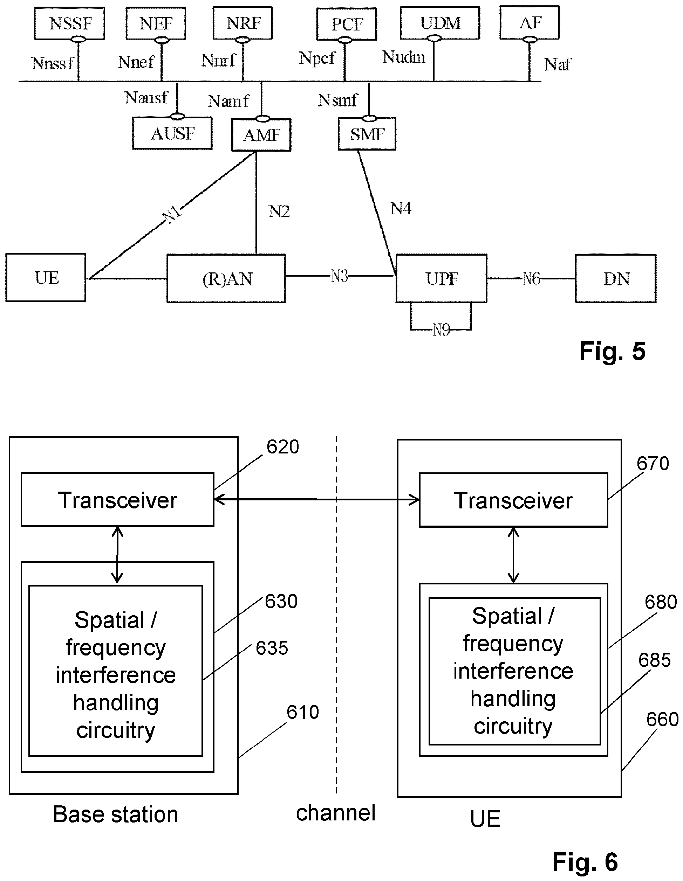

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement and control circuitry, which, in operation, performs the services using the established PDU session.

### NR Multi-beam

NR provides for directional transmission using beamforming, where a base station or a transmission and reception point performs transmission and reception using directive beams. For instance, for NR operation on high frequencies (e.g. bands located above 52 GHz), directional transmission using beamforming may be used to concentrate the energy or transmit power to overcome the attenuation in these high frequency bands.

Beamforming may provide for flexibility, e.g. by using different beams to simultaneously serve two UEs which are located in different parts of the cell corresponding to different directions with respect to a serving antenna, rather than or in addition to a separation in time and frequency domain. For instance, two UEs may be allocated to a same set of resource blocks if the spatial separation provided by beamforming is sufficient.

An example of multi-beam operation is TDM (Time-Division Multiplexing) transmission of beams, which may also be called beam sweeping. In TDM transmission of beams, the transmitter focusses the transmit power on one direction (beam) at one time instant. TDM may be performed in order to reach an intended coverage and/or as a result from hardware limitations, such as a transmitter being equipped with an analog beam-former. In order to avoid interference between the different beams, the different beams may each be transmitted or generated in different symbols. Another example of multi-beam operation is FDM (Frequency-Division Multiplexing) transmission of beams, where the different beams are each transmitted over different frequency resources, e.g. bandwidth parts. Like the TDM of beams, FDM transmission of beams can also avoid interference between the different beams.

### Cross Link Interference (CLI) handling

In the evolution of NR duplex operation, cross link interference (CLI) handling and management are considered. Therein, subband non-overlapping full duplex is studied as well as dynamic and flexible TDD. Possible studies include the identification of possible schemes and the evaluation of their feasibility and performances. Furthermore, CLI handling includes handling and management of inter gNB as well as inter UE CLI. In the case of subband non-overlapping full duplex, intra-subband CLI and inter-subband CLI may be considered (see RP-213591, Study on Evolution of NR Duplex Operation, Sections 3 and 4.1 incorporated herein by reference).

Layer 3 (L3, e.g. RRC) CLI interference measurement report includes SRS-RSRP (Sounding Reference Signal Received Power) and CLI-RSSI (Received Signal Strength Indication) (see 3GPP TSG RAN meeting #83, RP-190667, Status Report to TSG, section 2.1 incorporated herein by reference).

SRS-SRSP is defined as linear average of the power contributions of the SRS to be measured over the configured resource elements within the considered measurement frequency bandwidth in the time resources in the configured measurement occasions.

CLI-RSSI is defined as the linear average of the total received power observed only in certain OFDM symbols of measurement time resource(s), in the measurement bandwidth, over the configured resource elements for measurement by the UE.

In view of the above, and considering the above-mentioned context of full-duplex and dynamic/flexible TDD, the present disclosure considers the impact of CLI on the scheduling by a gNB.

Provided is a user equipment (UE) 660. As shown in **Fig. 6**, the UE comprises a transceiver 670 (also referred to as "UE transceiver") and circuitry 680 ("UE circuitry"). The circuitry 680, in operation, controls the circuitry 670 to measure interference per frequency range on one or more configured frequency ranges and/or per spatial direction in one or more configured spatial directions. The UE circuitry 680, in operation, generates a measurement report including an indication of the measured interference per frequency range and/or per spatial direction. The transceiver 670, in operation, transmits the measurement report.

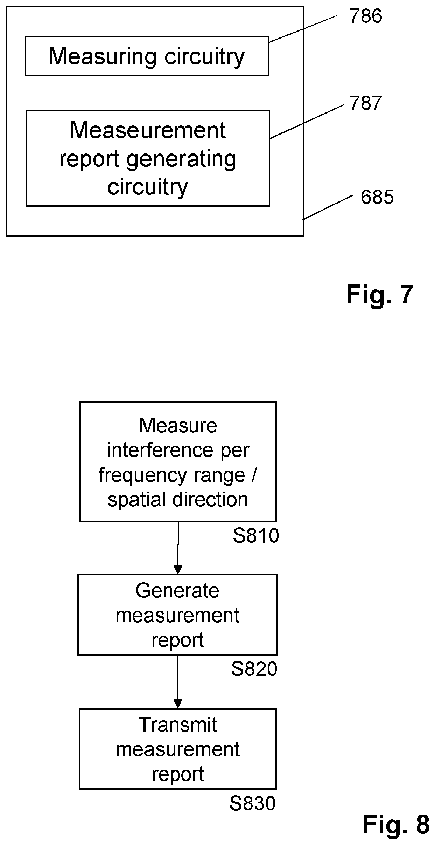

As shown in Fig. 6, exemplary UE circuitry comprises spatial / frequency interference handling circuitry 685. As is further shown in **Fig. 7**, exemplary spatial / frequency interference handling circuitry 685 includes measuring circuitry 786, which controls the transceiver to measure interference per frequency range and/ or per spatial direction, and measurement report generating circuitry 787, which generates measurement report including an indication of the measured interference.

Further provided is a base station 610. As shown in Fig. 6, the base station 610 comprises circuitry 630 ("base station circuitry") and a transceiver 620 ("base station transceiver"). The base station transceiver 620, in operation, receives a measurement report including an indication of measured interference per frequency range on one or more configured frequency ranges and/or per spatial direction in one or more configured spatial directions. Based on the indication of the measured interference included in the received measurement report, the base station circuitry 630 determines a channel condition at a first UE (UE#1, e.g. a UE from which the measurement report has been received, or a plurality of UEs including the first UE), and allocates, based on the determined channel condition, a downlink resource to the first UE (UE#1) and an uplink resource to a second UE (UE#2).

For instance, the UE 660 is a wireless communication device or user terminal or terminal device, which communicates with a base station 610 (e.g. a gNB) via a wireless channel, as shown in Fig. 6. E.g., the UE transceiver 670 transmits the measurement report to the base station 610, and the base station transceiver 620 receives the measurement report from the UE.

Further provided is a communication method for a UE 660. As shown in **Fig. 8**, the communication method for the UE comprises a step S810 of measuring interference per frequency range on one or more configured frequency ranges and/or per spatial direction in one or more configured spatial directions. The method further comprises a step of S820 of generating a measurement report including an indication of the measured interference per frequency range and/or per spatial direction. Furthermore, the method includes a step S830 of transmitting the measurement report generated.

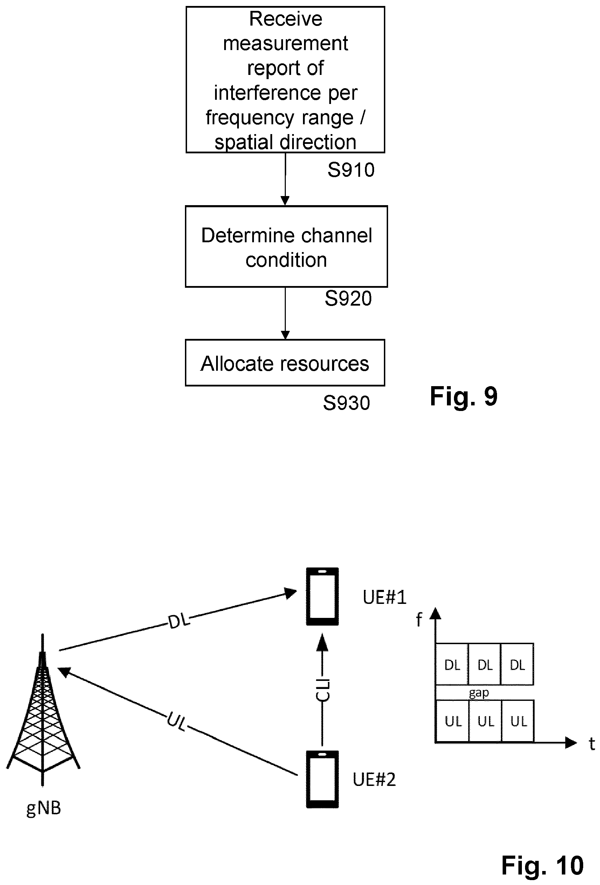

Also provided is a communication method for a base station, comprising steps shown in **Fig. 9** to be performed by a base station. In particular, the communication method for a base station comprises a step S910 of receiving a measurement report including an indication of measured interference per frequency range on one or more configured frequency ranges and/or per spatial direction in one or more configured spatial directions. In step S920, the base station determines, based on the indication of the measured interference from the received measurement report, a channel condition at a first UE. Based on the determined channel condition and/or the received measurement report, the base station, in step S930, allocates a downlink resource to the first UE and an uplink resource to a second UE.

In the present disclosure, examples, embodiments, and details refer and are applicable to each of the base station and the circuitry, and describe the devices as well as the corresponding methods, unless the context indicates otherwise.

As mentioned, the UE circuitry 680 controls the UE transceiver to measure or to perform a measurement of interference per frequency range or per spatial direction. The UE 660 is configured with one or more frequency ranges, with one or more spatial directions, or with both. Accordingly, the interference measurement may be performed with respect to each of one or more frequency ranges, spatial directions, or combinations of frequency directions and spatial directions. A resolution in frequency ranges may be resource blocks (RBs) or RB sets or groups. However, other resolutions in the frequency domain, such as bandwidth parts, are also possible. The spatial directions may be beams of a wireless communication system where beamforming is applied and which may be used for the UL and/or the DL. For instance, in the configuration and/or in the measurement report, a beam is indicated or characterized by a TCI (Transmission Configuration Indicator) state or an SSB (Synchronization Signal Block) index.

The UE circuitry 680 controls the UE transceiver 670 to perform an interference measurement. Control of the interference measurement includes, e.g., determining and/or setting spatial directions and or beams and/or frequency ranges for which the measurement is to be performed, and recording a signal (e.g. a reference signal) or measurement value received or measured by the transceiver. Exemplary measures of interference include RSSI per frequency range and/or spatial direction and/or RSRP per frequency range and/or direction per spatial direction.

A UE 660 may be configured with zero, one or multiple frequency ranges and may be further configured with zero, one or multiple spatial directions (e.g. beams), possibly in combination with the frequency ranges. A base station 610 may determine a channel condition per frequency range and/or per spatial direction based on one measurement report received by a UE or based on a plurality of measurement reports received from a plurality of UEs configured with respectively the same and/or with different spatial directions and/or frequency ranges.

Moreover, in the present disclosure, "frequency range" includes at least one of frequency bandwidth and location in frequency domain.

For instance, the interference measured and reported is a cross-link interference (CLI).

In some embodiments, the UE 660 is configured with one or more interference thresholds used to compare with the measured interference. The UE circuitry 680 compares the measured interference with the interference threshold or with the plurality of interference thresholds, and in the generation of the measurement report, one bit or a plurality of bits (e.g. a group of bits or quantized bits) are included in the indication of the measured interference, which indicate the result of the comparison per frequency range and/or per spatial direction.

For instance, if there is one configured threshold, a one-bit indicator or flag per configured frequency range, spatial direction, or combination of spatial direction and frequency range, indicates whether the interference is above (e.g. value "1") or below (e.g. value "0") the threshold. For up to three thresholds, an indicator of two bits may indicate which of the plurality of thresholds are exceeded. The UE may be configured with the number of thresholds as well as with the granularity or resolution defined by a plurality of thresholds (e.g. a single threshold such as -100dB, a larger granularity (-60/-80/-100dB) indicated by two bits or a smaller granularity (-60/-70/-80/-90/-100dB) indicated by three bits) for each frequency range and/or spatial direction. For instance, the number of bits is chosen as a minimum number of bits to allow for representing a certain number of configured thresholds.

In some embodiments, the UE circuitry 680, in operation, controls the UE transceiver 670 to perform, as a measurement of the interference per frequency range and/or per spatial direction, a RSSI measurement. The indication of the measured interference in the measurement report indicates the measured RSSI.

For instance, the UE is configured with one or multiple frequency ranges, e.g. in terms of RB set/group for RSSI measurement. Alternatively or in addition to the frequency range(s), the UE may be configured with zero, one, or multiple spatial direction indications, e.g. beam indications, for RSSI measurement. For instance, the spatial directions or beams are indicated and characterized by TCI state or SSB index, and may optionally further be characterized by an SRI (SRS resource indicator).

In the present example, the UE is configured with one or more thresholds used to compare against the measured RSSI. UE compares the measured RSSI and the configured threshold and then reports the results with one or more bits, which represents the interference level in terms of the granularities decided by the configured threshold(s), e.g. larger granularities with -60/-80/-100dBm, or smaller granularities with -60/-70/-80/-90/-100dBm. In the measurement report, the measured RSSI is indicated, e.g. in terms of the result of comparison with one or more thresholds as mentioned above.

For instance, the measurement and report are a layer 1 (L1, physical layer) measurement and a L1 measurement report. However, L2 (e.g. MAC layer) or L3 (RRC) measurement and measurement report are also possible.

In Table 1 below, provided is an example of indication of measured interference using one threshold. The values "0" or "1" represent that the interference level is below or above the threshold.

**Table 1**

| Spatial index | RB set #0 | RB set #1 | RB set #2 | RB set #3 | RB set #4 | RB set #5 | | RB set #N-1 |
|---|---|---|---|---|---|---|---|---|
| 0 | 0 | 0 | 0 | 1 | 1 | 0 | ... | 0 |
| 1 | 0 | 0 | 0 | 1 | 1 | 0 | ... | 0 |
| 2 | 1 | 1 | 1 | 1 | 1 | 1 | ... | 1 |
| ... | ... | ... | ... | ... | ... | ... | ... | ... |
| M-1 | 0 | 0 | 0 | 1 | 1 | 0 | ... | 0 |

A 1-bit indication (in the case of one threshold) or a few quantized bits (e.g. two or three bits) for a certain frequency range and/or direction/index provides a compact and efficient feedback or signaling of interference measurement, which may save control signaling overhead. Furthermore, in the case of L1 measurement report, a base station (e.g. gNB) may be enabled to perform scheduling with a short feedback interval.

In some embodiments, the UE is configured with one or more SRS resource configuration(s) for SRS-RSRP measurement. Each SRS resource configuration includes a configuration of one or more of the following parameters: SRS sequence, frequency range out of the one or more frequency ranges (each including bandwidth and/or location in frequency domain). Furthermore, in addition or as part of the SRS configuration, the UE may be configured with one or more parameters indicating the spatial direction or the receiving direction, which may be TCI state, SSB index, or SRI. For instance, the SRI represents an SRS resource configuration.

In the present embodiments, the UE may be configured with one or more threshold(s) used to compare against the measured SRS-RSRP, in a similar manner as described above for the RSSI per frequency range/ spatial direction. The UE compares the measured SRS-RSRP and the configured threshold and then report the results in the interference measurement report with one or more bits (e.g. a flag or quantified bits) per SRS configuration, which represents the interference level in terms of the granularities decided by the configured threshold(s).

The measurement and report may be a layer 1 (L1, physical layer) measurement and a L1 measurement report. However, L2 (e.g. MAC layer) or L3 (RRC) measurement and measurement report are also possible.

Using SRS as reference allows for identifying the interference (e.g. a CLI) from a certain UE or UEs from a certain cell, which may facilitate both intra-cell and inter-cell interference cell management.

Furthermore, if a L1 measurement report is used, gNB scheduling with short feedback interval may be facilitated.

In some embodiments, an indication of interference per frequency range (e.g. CLI-RSSI) for different spatial directions /indexes such as TCI states is added on top of a L1 RSRP measurement report. The interference is measured per spatial direction. The measurement report includes, as an L1 RSRP measurement, an indication of a reference signal received power, RSRP measured on a downlink, uplink or sidelink resource per spatial direction for the one or more spatial directions, and further includes, for each spatial direction in combination with the one or more configured frequency ranges, an RSSI measurement as the measurement of interference per frequency range (e.g. CLI-RSSI). For instance, the indication of interference per frequency range is added to a measurement report of L1-RSRP reporting shown in technical specification 3GPP TS 38.214, Physical layer procedures for data, Section 5.2.1.4.3, V16.9.0 (incorporated herein by reference).

The data structure of the measurement report may be:
- TCI#1 {measured RSRP in DL, measured CLI in RB set/group 0,1,2,...}
- TCI#1 {measured RSRP in DL, measured CLI in RB set/group 0,1,2,...}

An exemplary data structure of the indication of RSRP and interference in terms of RSI is shown in Table 2, where spatial directions (or beams) are indicated in terms of TCI states. The RSSI as a measure of interference per frequency range (RB), e.g. CLI-RSSI, can be an absolute value or 0/1 value (flag) or a plurality of quantized bits as shown in the above-described embodiments.

**Table 2**

| TCI state | RSRP | Interference (e.g. CLI) | | | | | | |
|---|---|---|---|---|---|---|---|---|
| | | RB set 0 | RB set 1 | RB set 2 | ... | ... | ... | ... |
| TCI #1 | | | | | | | | |
| TCI #2 | | | | | | | | |
| TCI #3 | | | | | | | | |
| ... | ... | ... | ... | ... | ... | ... | ... | ... |

In accordance with the present embodiments, the layer 1 measurement report indicates interference such as CLI associates with the spatial direction and frequency range associated with the received signal. This facilitates providing an accurate reporting which reflects the SINR for gNB to determine whether a resource is usable in a certain direction and how large a gap (or guard band) from an UL channel (as allocated to a second UE) should be.

In Table 2, the "RSRP" column may for instance refer to CSI-RS (Channel State Information Reference Signal) RSRP, and the interference per CLI may be SRS-based RSRP or RSSI as described above.

In some embodiments including some examples described above, the measurement report is a layer 1 (L1) measurement report. Accordingly, scheduling by the gNB with a fast feedback is facilitated. However, the present disclosure is not limited to layer 1 measurement and measurement report. For instance, as has been mentioned above with respect with respect to RSRP and RSSI measurements and indication using thresholds, the measurement report may also be a layer 2 or layer 3 measurement report.

In the present disclosure, RSSI and RSRP are provided as possible measures of interference, which are, however, not limiting. Interference may refer to uplink, sidelink, or aggregated or averaged interference from various possible sources..

As mentioned above, the base station circuitry 630 determines a channel condition. In some embodiments, the determined channel condition includes at least one of a channel between the base station 610 and the first user equipment UE#1 and a channel between the first user equipment UE#1, which is a victim UE of interference when receiving data on the UE or sidelink) and a second user equipment UE#2, which is an interfering UE when transmitting on the uplink or sidelink. The base station circuitry may further determine a beamforming capability of the first UE, a beamforming capability of the second UE, and a transmission power of the second (interfering) UE, to take into account in the resource allocation.

The beamforming capability may correspond to capability in terms of specifications / device types of the user devices and/or may further indicate how the UE is able to receive or transmit on a certain beam in a certain frequency in accordance with current channel conditions as determined based on capability reports received from one or more UEs.

The transmission power may correspond to capability in terms of how large power in maximum UE is able to output when transmitting data or signal. The transmission power may also correspond to the maximum output power that UE is allowed to use and limited by the network.

The channel condition between UEs may be determined as a distance between the UEs, fading, and operating frequency or frequencies. Furthermore, the channel between the base station and the victim UE may be determined as a received signal level of a signal of the gNB at the victim UE (e.g. as reported in the measurement report, such as RSRP or RSSI).

As described, one or more of the above parameters (channel condition between UEs and between UE and base station, beamforming capabilities and transmission power(s)) may be determined by the base station based on the measurement report received from the UE. In addition or alternatively, the above parameters and other parameters comprised by the channel condition or used to determines the channel condition may be estimated or measured by the UE.

In some embodiments, the base station 610 comprises an interface for communication between base stations, and the circuitry, in operation, is configured to control reporting of the channel condition via the interface. The parameters mentioned above may be exchanged or shared between base stations via the interface. E.g. the interface includes one or more of an Xn interface between gNBs or eNBs, X2 interface between eNB and gNB, and interfaces between gNBs and corenetwork such as S1 or NG interface between base station and core network. In addition to receiving a measurement report from a UE, the measurement report may be received from another base station via the interface between base stations.

A base station may evaluate the channel condition at the potential victim UE to decide whether to schedule DL and UL in close RBs and to decide how large the guard band between the UL and DL frequency ranges should be set. Based on the received measurement report and/or based on the determined channel condition, the base station allocates resources to UEs including a DL resource for UE#1 and UL resource for UE#2, which may include frequency resources on a common time resource (including one or more common or overlapping TTI(s) or e.g. symbol(s), slot(s), or subframe(s)) common to the UL resource and the UL resource. In some embodiments, as shown in **Fig. 10****,** the allocation of resources may include determining a guard band in frequency domain between the downlink resource and the uplink resource. This determination may include determining whether resources for a first UE and the second UE are to be allocated to the same frequency range (e.g. RB group), which may be possible when the first UE and the second UE uase differenc serving beams, or to adjacent frequency ranges, or to frequency ranges with a frequency gap between them.

In addition to a UE 660 and a base station 610, a communication method for a UE, and a communication method for a base station, further provided is an intergrated circuit (IC) for controlling a UE to carry out the disclosed communication method for the UE according to each of the disclosed embodiments and examples, and an IC for controlling a base station UE to carry out the disclosed communication method for the base station according to each of the disclosed embodiments and examples.

An IC configured for controlling a UE comprises control circuitry which, in operation, controls performing a measurement of interference per frequency range on one or more configured frequency ranges and/or per spatial direction in one or more configured spatial directions, and to generate a measurement report including an indication of the measured interference per frequency range and/or per spatial direction, and transceiver circuitry which, in operation, controls transmission of the measurement report.

An IC configured for controlling a base station comprises transceiver circuitry which, in operation, controls reception of a measurement report including an indication of measured interference per frequency range on one or more configured frequency ranges and/or per spatial direction in one or more configured spatial directions, and control circuitry which, in operation, determines, based on the indication of the measured interference, a channel condition at a first UE and allocates, based on the determined channel condition, a downlink resource to the first UE and an uplink resource to a second UE.

Techniques disclosed by the present disclosure, including a user equipment 660, a base station 610, methods for a user equipment and for a base station as well as integrated circuits for controlling a UE or a base station, allow for taking into account the impact of interference (e.g. CLI) on scheduling by a base station (e.g. a gNB) and facilitate for the base station e.g. whether to allow DL and UL transmission in adjacent frequency resources and how large protection gap should be used. In the measuring and reporting of interference, a resolution or granularity in spatial domain and frequency domain is provided by the measurement report in accordance with the present disclosure.

Moreover, with a spatial and/or frequency domain measurement report, efficient UE paring and alleviation or avoidance of UE-UE interference is facilitated. When the expected interference for a first UE from a second UE is known to the base station, the base station may decide whether or not TDD and/or FDD need to be applied, e.g. in a system where beamforming is used, to avoid or reduce interference, For instance, UE side Tx and Rx beamforming may enable more efficient resource allocation having zero gap or small gap (guard band). The present disclosure considers this feature should also be considered in the interference measurement/report design. Moreover, a spatial and frequency domain measurement report in accordance with the present disclosure may facilitate for the gNB to determine whether UE#1 shown in Fig. 10 will suffer strong CLI from UE#1, e.g. if UE#1 applies beamforming and/or UE#2 applies beamforming, and may schedule UE#1 and UE#2 accordingly, e.g. by adjusting the guard band between the resources allocated to UE#1 and to UE#2. Accordingly, spectral efficiency and flexibility may be enhanced, e.g. by exploiting the flexibility that is provided by beamforming more efficiently..

Furthermore, the techniques of the present disclosure may facilitate reducing overhead for interference reporting (e.g. with respect to the above-mentioned L3 measurement report of RP-190667), and provide a compact solution, e.g. by indicating interference or signal strength / power in terms of one or more thresholds represented by one or more bits. Moreover, with a compact solution, more detailed reporting in the frequency domain (e.g. indication specific to frequency ranges such as RBs or RB sets / groups) as well as with respect to the measured interference (e.g. by providing one or more thresholds) is enabled.

Furthermore, in embodiments where the measurement report is a L1 measurement report, fast measurement and report are provided to facilitate the gNB scheduling. Such L1 measurement/report may facilitate assisting gNB on whether it is feasible to schedule UE #1 with DL and UE #2 with UL in close RB sets/groups and how large a gap to be utilized should be.

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

The present disclosure may be applied to any of a licensed band and an unlicensed band.

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Summarizing, a to a first aspect, provided is a user equipment, UE, comprising a transceiver and circuitry which, in operation, controls the transceiver to measure interference per frequency range on one or more configured frequency ranges and/or per spatial direction in one or more configured spatial directions, and generates a measurement report including an indication of the measured interference per frequency range and/or per spatial direction, wherein the transceiver, in operation, transmits the measurement report.

According to a second aspect provided in addition to the first aspect, the UE is configured with one or more interference thresholds, the circuitry, in operation, compares the measured interference with the one or more interference thresholds, and the indication of the measured interference includes one bit or a plurality of quantized bits representing the result of the comparison.

According to a third aspect provided in addition to the first aspect or the second aspect, the circuitry, in operation, controls the transceiver to perform, as a measurement of the interference per frequency range and/or spatial direction, a received signal strength indication, RSSI, measurement, and the indication of the interference indicates the measured RSSI.

According to a fourth aspect provided in addition to the first aspect or the second aspect, the UE is configured with one or more sounding reference signal, SRS, resource configurations, each SRS resource configuration including a configuration of one or more of SRS sequence, frequency range out of the one or more frequency ranges, and with an indication of a spatial direction out of the one or more spatial directions, the circuitry, in operation, controls the transceiver to perform, as a measurement of the interference, a measurement of reference signal received power, RSRP per SRS resource configuration for each of the one of more SRS resource configurations, and the indication of the measured interference indicates the RSRP per SRS resource configuration for the one or more SRS resource configurations.

According to a fifth aspect provided in addition to any of the first to fourth aspects, the circuitry, in operation, controls the transceiver to measure the interference per spatial direction, and wherein the measurement report includes an indication of a reference signal received power, RSRP measured on a downlink, uplink or sidelink resource per spatial direction for the one or more spatial directions.

According to a sixth aspect provided in addition to any of the first to fifth aspects, the measurement report is a layer 1 measurement report.

According to a seventh aspect, provided is a base station comprising a transceiver which, in operation, receives a measurement report including an indication of measured interference per frequency range on one or more configured frequency ranges and/or per spatial direction in one or more configured spatial directions, and circuitry which, in operation, determines, based on the indication of the measured interference, a channel condition at a first UE and allocates, based on the determined channel condition, a downlink resource to the first UE and an uplink resource to a second UE.

According to an eighth aspect provided in addition to the seventh aspect, the determined channel condition includes at least one of a channel between the base station and the first UE and a channel between the first UE and the second UE, and wherein the circuitry, in operation, determines a beamforming capability of the first UE, a beamforming capability of the second UE, and a transmission power of the second UE.

According to a ninth aspect provided in addition to the seventh aspect or eighth aspect, the downlink resource and the uplink resource include a time resource common to both the downlink resource and the uplink resource, and the allocating includes determining a guard band in frequency domain between the downlink resource and the uplink resource.

According to a tenth aspect provided in addition to any of the seventh to ninth aspects, the base station comprises an interface for communication between base stations, and the circuitry, in operation, is configured to control reporting of the channel condition via the interface.

According to an eleventh aspect, provided is a communication method comprising the following steps to be performed by a user equipment, UE: measuring interference per frequency range on one or more configured frequency ranges and/or per spatial direction in one or more configured spatial directions, generating a measurement report including an indication of the measured interference per frequency range and/or per spatial direction, and transmitting the measurement report.

According to a twelfth aspect, provided is a communication method comprising the following steps to be performed by a base station: receiving a measurement report including an indication of measured interference per frequency range on one or more configured frequency ranges and/or per spatial direction in one or more configured spatial directions, determining, based on the indication of the measured interference, a channel condition at a first UE, and allocating, based on the determined channel condition, a downlink resource to the first UE and an uplink resource to a second UE.

According to a thirteenth aspect, provided is an integrated circuit configured for controlling a user equipment, UE, comprising control circuitry which, in operation, controls performing a measurement of interference per frequency range on one or more configured frequency ranges and/or per spatial direction in one or more configured spatial directions, and to generate a measurement report including an indication of the measured interference per frequency range and/or per spatial direction, and transceiver circuitry which, in operation, controls transmission of the measurement report.

According to a fourteenth aspect, provided is an integrated circuit configured for controlling a base station, comprising: transceiver circuitry which, in operation, controls reception of a measurement report including an indication of measured interference per frequency range on one or more configured frequency ranges and/or per spatial direction in one or more configured spatial directions, and control circuitry which, in operation, determines, based on the indication of the measured interference, a channel condition at a first UE and allocates, based on the determined channel condition, a downlink resource to the first UE and an uplink resource to a second UE.

In addition, a non-transitory medium is provided storing program instructions which, when executed on a processing circuitry such as a general purpose processor, cause the processing circuitry to perform all steps of the above mentioned method embodiments.

In summary, techniques disclosed herein feature a user equipment, a base station, and communication methods for a UE and for a base station. The UE comprises a transceiver and circuitry which, in operation, controls the transceiver to measure interference per frequency range on one or more configured frequency ranges and/or per spatial direction in one or more configured spatial directions, and to generate a measurement report including an indication of the measured interference per frequency range and/or per spatial direction. The transceiver, in operation, transmits the measurement report.

## Claims

1. A user equipment, UE, comprising:
a transceiver; and
circuitry which, in operation, controls the transceiver to measure interference per frequency range on one or more configured frequency ranges and/or per spatial direction in one or more configured spatial directions, and generates a measurement report including an indication of the measured interference per frequency range and/or per spatial direction,
wherein the transceiver, in operation, transmits the measurement report.

2. The UE according to claim 1, wherein the UE is configured with one or more interference thresholds, the circuitry, in operation, compares the measured interference with the one or more interference thresholds, and the indication of the measured interference includes one bit or a plurality of quantized bits representing the result of the comparison.

3. The UE according to any of claims 1 or 2, wherein the circuitry, in operation, controls the transceiver to perform, as a measurement of the interference per frequency range and/or spatial direction, a received signal strength indication, RSSI, measurement, and the indication of the interference indicates the measured RSSI.

4. The UE according to claim 1 or 2, wherein the UE is configured with one or more sounding reference signal, SRS, resource configurations, each SRS resource configuration including a configuration of one or more of SRS sequence, frequency range out of the one or more frequency ranges, and with an indication of a spatial direction out of the one or more spatial directions, the circuitry, in operation, controls the transceiver to perform, as a measurement of the interference, a measurement of reference signal received power, RSRP per SRS resource configuration for each of the one of more SRS resource configurations, and the indication of the measured interference indicates the RSRP per SRS resource configuration for the one or more SRS resource configurations.

5. The UE according to any of claims 1 to 4, wherein the circuitry, in operation, controls the transceiver to measure the interference per spatial direction, and wherein the measurement report includes an indication of a reference signal received power, RSRP measured on a downlink, uplink or sidelink resource per spatial direction for the one or more spatial directions.

6. The UE according to any of claims 1 to 5, wherein the measurement report is a layer 1 measurement report.

7. A base station comprising:
a transceiver which, in operation, receives a measurement report including an indication of measured interference per frequency range on one or more configured frequency ranges and/or per spatial direction in one or more configured spatial directions; and
circuitry which, in operation, determines, based on the indication of the measured interference, a channel condition at a first UE and allocates, based on the determined channel condition, a downlink resource to the first UE and an uplink resource to a second UE.

8. The base station according to claim 7, wherein the determined channel condition includes at least one of a channel between the base station and the first UE and a channel between the first UE and the second UE, and wherein the circuitry, in operation, determines a beamforming capability of the first UE, a beamforming capability of the second UE, and a transmission power of the second UE.

9. The base station according to claim 7 or 8, wherein the downlink resource and the uplink resource include a time resource common to both the downlink resource and the uplink resource, and the allocating includes determining a guard band in frequency domain between the downlink resource and the uplink resource.

10. The base station according to claim 7 to 9, comprising an interface for communication between base stations, and the circuitry, in operation, is configured to control reporting of the channel condition via the interface.

11. A communication method comprising the following steps to be performed by a user equipment, UE:
measuring interference per frequency range on one or more configured frequency ranges and/or per spatial direction in one or more configured spatial directions;
generating a measurement report including an indication of the measured interference per frequency range and/or per spatial direction; and
transmitting the measurement report.

12. A communication method comprising the following steps to be performed by a base station:
receiving a measurement report including an indication of measured interference per frequency range on one or more configured frequency ranges and/or per spatial direction in one or more configured spatial directions;
determining, based on the indication of the measured interference, a channel condition at a first UE; and
allocating, based on the determined channel condition, a downlink resource to the first UE and an uplink resource to a second UE.

13. An integrated circuit configured for controlling a user equipment, UE, comprising:
control circuitry which, in operation, controls performing a measurement of interference per frequency range on one or more configured frequency ranges and/or per spatial direction in one or more configured spatial directions, and to generate a measurement report including an indication of the measured interference per frequency range and/or per spatial direction; and
transceiver circuitry which, in operation, controls transmission of the measurement report.

14. An integrated circuit configured for controlling a base station, comprising:
transceiver circuitry which, in operation, controls reception of a measurement report including an indication of measured interference per frequency range on one or more configured frequency ranges and/or per spatial direction in one or more configured spatial directions; and
control circuitry which, in operation, determines, based on the indication of the measured interference, a channel condition at a first UE and allocates, based on the determined channel condition, a downlink resource to the first UE and an uplink resource to a second UE.
